# EUROPÄISCHE PATENTSCHRIFT

(11) **EP 0 758 714 B1**
(45) Veröffentlichungstag und Bekanntmachung des Hinweises auf die Patenterteilung: **17.11.1999**
(21) Anmeldenummer: 96112756.0
(22) Anmeldetag: 08.08.1996
(51) Int. Cl.: F01N 3/20

(54) **Abgasstrang eines Ottomotors**
Exhaust line of a spark ignition engine
Ligne d'échappement d'un moteur à allumage commandé

(30) Priorität: 12.08.1995 DE 19529835
(43) Veröffentlichungstag der Anmeldung: 19.02.1997
(73) Patentinhaber: ADAM OPEL AG, 65423 Rüsselsheim (DE)
(72) Erfinder: Von Brand, Heinz-Ewo, Dipl.-Ing., 55545 Bad Kreuznach (DE)
(74) Vertreter: Kümpfel, Heinz, Dipl.-Ing.

(56) Entgegenhaltungen:
- EP-A- 0 433 772
- EP-A- 0 460 507
- EP-A- 0 556 854
- DE-C- 4 310 962
- DE-C- 4 334 071
- US-A- 4 155 986

## Beschreibung

Die Erfindung betrifft einen Abgasstrang eines Ottomotors, insbesondere zum Antrieb eines Kraftfahrzeuges gemäß dem Oberbegriff des Patentanspruches 1.

Beim Betrieb von Ottomotoren in Kraftfahrzeugen ist es üblich, im Abgasstrang mindestens einen Katalysator vorzusehen, welcher als Dreiwegekatalysator unverbrannte Kohlenwasserstoffe, Kohlenmonoxyd und zum Teil Stickoxyde in einem ausreichenden Maße abbaut, wenn der Motor mit einem annähernd stöchiometrischen Gemisch betrieben wird. Dies wird in bekannter Weise mittels einer Lambda-Regelung erreicht, bei der eine Sauerstoffsonde im motornahen Abgasstrom die Gemischzusammensetzung mißt.

Um den Anteil der Stickoxyde im Abgas weiter zu reduzieren, sind sogenannte Zweibettkatalysatoren bekannt (Bosch - Kraftfahrttechnisches Taschenbuch, 19. Auflage, 1984, Seite 445), bei denen in einem Gehäuse ein Reduktionssowie ein Oxydationskatalysator untergebracht sind. Der Motor muß dabei mit einem fetten Gemisch bei einer Luftzahl Lambda von etwa 0,9 gefahren werden. Im ersten Katalysator, dem Reduktionskatalysator, wird NO reduziert, wobei u. a. NH₃ entsteht. Nach Zugabe von Sekundärluft, z. B. mittels einer Sekundärluftpumpe, kann dann im zweiten Katalysator, dem Oxydationskatalysator, die Oxydation von CO und HC ablaufen. Dabei verbrennt aber auch ein Teil des NH₃ wieder zu NO. Nachteilig ist auch, daß der Reduktionskatalysator nur eine relativ geringe Temperatur bis maximal 700°C verträgt, während bei Ottomotoren mit stöchiometrischem Gemisch oder magerer Abgastemperaturen deutlich über 900°C auftreten. Mit diesen bekannten Katalysatorenanordnungen ist somit nur ein verbrauchsungünstiger Motorbetrieb mit fettem Gemisch möglich.

Mit EP 0 433 772 B1 ist eine Brennkraftmaschine der gattungsgemäßen Art beschrieben, bei der ein einen Stickoxide reduzierenden Katalysator (SCR-Katalysator) aufnehmendes Bypassrohr mit einem Bypaßventil so geregelt wird, daß sich am SCR-Katalysator ein wiederholter Temperatur-Anstieg und ein analoger Kühlvorgang um eine Grenztemperatur einstellt.

Ein kontinuierlicher Magerbetrieb ist durch den erforderlichen wiederholten Wechsel der Temperatur am SCR-Katalysator nur schwierig realisierbar.

Aufgabe der Erfindung ist es, einen Abgasstrang mit einem Oxydationskatalysator sowie einem Reduktionskatalysator zu schaffen, welcher einen kraftstoffverbrauchsenkenden Magerbetrieb mit entsprechend geringen Mengen an Kohlendioxyd bei ausreichender Lebensdauer ermöglicht und bei dem die Stickoxydanteile im Abgas bei kontinuierlichem Betrieb trotzdem niedrig gehalten werden können.

Bei einer Brennkraftmaschine der gattungsgemäßen Art wird diese Aufgabe erfindungsgemäß durch die kennzeichnenden Merkmale des Patentanspruches 1 gelöst. Vorteilhafte Weiterbildungen der Erfindung sind Gegenstand der Unteransprüche.

Damit kann bei hohem Anteil von NOₓ im Abgas das vollständige Abgasvolumen oder auch nur ein Teil des Abgasvolumens vor Eintritt in den Oxydationskatalysator den SCR-Katalysator durchlaufen, wobei unter der Voraussetzung der richtigen Temperatur von ca. 300°C bis maximal 700°C die im Abgas vorhandenen oder zugeführten HC-Bestandteile in H und C aufgelöst werden. Diese Elemente suchen Bindung zu Sauerstoff und oxydieren zu H₂O und CO₂. Ebenso wird NOₓ aufgespalten in N und 3, wobei die Sauerstoffatome Bindungen mit dem vorhandenen H und C eingehen und die freien Stickstoffatome sich zu N₂, dem in der Luft vorhandenen Stickstoffgas, verbinden. Das zuviel vorhandene CH-Gas geht als Schlupf durch den SCR-Katalysator und wird im nachfolgenden Oxydationskatalysator nachverbrannt.

Durch eine gezielte Steuerung des Durchflußvolumens kann der SCR-Katalysator auf seiner wirksamen Temperatur gehalten werden, auch wenn der nachfolgende Oxydationskatalysator bei einer höheren Temperatur arbeitet. Damit gelingt es, den Anteil der NOₓ-Bestandteile am Abgas wesentlich zu reduzieren. Die Lebensdauer des SCR-Katalysators bleibt infolge der reduzierten Temperaturen gegenüber dem Oxydationskatalysator erhalten. Der Motor kann mit kraftstoffsenkendem Magerbetrieb gefahren werden, bei dem eine entsprechend geringe Menge Kohlendioxyd emittiert wird und trotzdem die Stickoxydanteile im Abgas niedrig gehalten werden.

In vorteilhafter Weise kann der Abgasstrang auch in Verbindung mit einem oder mehreren Startkatalysatoren betrieben werden, indem der bzw. die Startkatalysatoren in einem Bereich zwischen Lambda-Sonde und Oxydationskatalysator in der Abgasrohrleitung bzw. in einem Bereich des Abgaskrümmers angeordnet sind und von dem Bypassrohr umgangen werden.

Die Abgasklappen in dem Bypassrohr und/oder in der Abgasrohrleitung werden in Abhängigkeit von den Temperaturen des SCR-Katalysators und des Oxydationskatalysators sowie vom Sauerstoffanteil des Abgases an der Lambda-Sonde gesteuert. Zur Steuerung der Abgasklappen kann zusätzlich auch eine Stickoxyd-Sonde Verwendung finden, die gleichfalls wie die Lambda-Sonde vor dem SCR-Katalysator im Abgasstrom angeordnet ist.

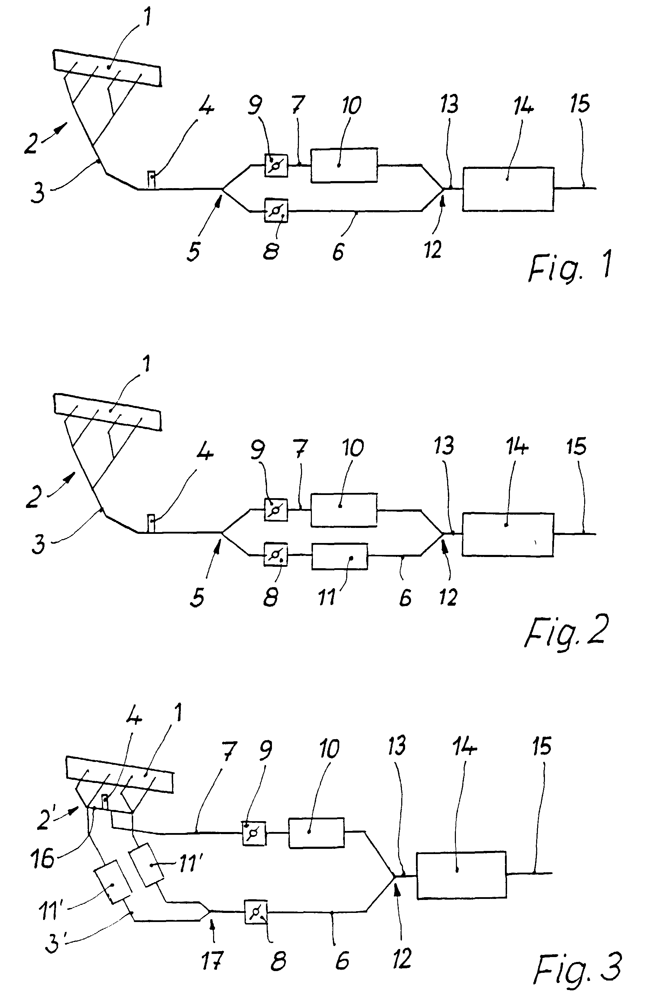

Ausführungsbeispiele der Erfindung sind nachstehend anhand von Zeichnungen näher beschrieben, wobei die Figuren 1 bis 3 schematisch jeweils ein Beispiel für einen erfindungsgemäßen Abgasstrang eines Vierzylindermotors darstellen.

Figur 1 zeigt eine Grundausführung der Erfindung. Am Abgasflansch 1 eines Vierzylinder-Ottomotors schließt ein Verteilerrohr 2 eines Abgaskrümmers 3 an. Am Abgaskrümmer 3 ist eine Lambda-Sonde 4 eingesetzt. In Figur 1 und 2 setzt sich der Abgasstrang fort bis zu einer Abzweigung 5, an welcher von einer Abgasrohrleitung 6 ein Bypassrohr 7 abzweigt. Sowohl in der Abgasrohrleitung 6 als auch im Bypassrohr 7 ist jeweils eine regelbare Abgasklappe 8 bzw. 9 angeordnet. Im Bypassrohr 7 ist darüber hinaus ein SCR-Katalysator 10 angeordnet.

Wie eine modifizierte Ausführungsform in Figur 2 zeigt, kann in der Abgasrohrleitung 6 ein Startkatalysator 11 vorgesehen sein. An einem Rohrknoten 12 laufen die Abgasrohrleitung 6 und das Bypassrohr 7 wieder in einem Sammelrohr 13 zusammen. Im Sammelrohr 13 ist ein geregelter Dreiwege-Oxydationskatalysator 14 angeordnet. Von diesem durchläuft das Abgas ein Endrohr 15 und gelangt durch dieses ins Freie.

Figur 3 zeigt eine gegenüber Figur 2 weiter modifizierte Ausführungsform der Erfindung. Am Abgasflansch 1 schließt hier ein Verteilerrohr 2' mit zwei Krümmerrohren 3' an, die mit einem Verbindungsrohr 16 zum Schwingungsausgleich der Gassäulen verbunden sind. In beiden Krümmerrohren 3' ist jeweils ein Startkatalysator 11' angeordnet. Im Verbindungsrohr 16 ist die Lambda-Sonde 4 eingesetzt. Vom Verbindungsrohr 16 geht ein Bypassrohr 7 aus. Die Krümmerrohre 3' laufen an einem Rohrknoten 17 zu der Abgasrohrleitung 6 zusammen. Sowohl in der Abgasrohrleitung 6 als auch in dem Bypassrohr 7 ist jeweils eine Abgasklappe 8 bzw. 9 angeordnet. Im Bypassrohr 7 befindet sich der SCR-Katalysator 10. Abgasrohrleitung 6 und Bypassrohr 7 laufen am Rohrknoten 12 zu einem Sammelrohr 13 zusammen, in dessen Verlauf ein geregelter Dreiwege-Oxydationskatalysator 14 angeordnet ist. Von diesem gelangt das Abgas über ein Endrohr 15 ins Freie. Die Abgasklappen 8 und 9 werden über elektrische oder pneumatische Stellmotoren bewegt, welche über einen elektronischen Rechner oder über das vorhandene elektronische Motormanagement entsprechend den Abgaswerten und Temperaturen gesteuert werden.

Mit einem derartigen Abgasstrang kann ein Ottomotor in einem kraftstoffsparenden Magerbetrieb gefahren werden, bei dem entsprechend geringe Mengen CO und HC mit dem Abgas emittiert werden. Die dabei auftretende erhöhte Temperatur des Abgases ist für das schnelle Ansprechen eines Startkatalysators und eines Oxydationskatalysators von Vorteil. Der bei dem Magerbetrieb auftretende erhöhte NOₓ-Anteil im Abgas wird in dem Volumen, welches durch den SCR-Katalysator geleitet wird, wieder reduziert. Da die Menge des durch den SCR-Katalysator strömenden Abgases temperaturabhängig geregelt wird, kann der SCR-Katalysator auch bei funktionsbedingt notwendiger Anordnung vor dem Oxydationskatalysator auf einem geringeren Temperaturniveau betrieben werden als der Oxydationskatalysator.

## Patentansprüche

1. Abgasstrang eines Ottomotors, insbesondere zum Antrieb eines Kraftfahrzeuges, mit einer Abgasrohrleitung, einem durch eine Lambda-Sonde geregelten Dreiwege-Oxydationskatalysator und einem mit selektiver katalytischer Reduktion arbeitenden Katalysator, einem sogenannten SCR-Katalysator, zur weiteren Reduzierung von NOₓ, wobei der SCR-Katalysator (10) in einem parallel zur Abgasrohrleitung (6) zwischen der Lambda-Sonde (4) und dem Oxydationskatalysator (14) verlaufenden Bypassrohr (7) angeordnet ist und zumindest das Bypassrohr (7) oder die Abgasrohrleitung (6) mit einer in Abhängigkeit von Motorparametern beeinflußten Abgasklappe (8, 9) regelbar sind, **dadurch gekennzeichnet,** daß die Abgasklappen (8, 9) in dem Bypassrohr (7) und/oder in der Abgasrohrleitung (6) in Abhängigkeit von der Temperatur des SCR-Katalysators (10) und des Oxydationskatalysators (14) sowie vom Sauerstoffanteil des Abgases an der Lambda-Sonde (4) gesteuert sind.

2. Abgasstrang nach Anspruch 1, **dadurch gekennzeichnet,** daß auf die Steuerung der Abgasklappen (8, 9) eine im Abgasstrom vor dem SCR-Katalysator (10) angeordnete Stickoxyd-Sonde einwirkt.

3. Abgasstrang nach Anspruch 1 oder 2, **dadurch gekennzeichnet,** daß in einem Bereich zwischen Lambda-Sonde (4) und Oxydationskatalysator 14) ein oder mehrere Startkatalysatoren (11; 11') angeordnet sind und von dem Bypassrohr (7) umgangen werden.

## Revendications

1. Ligne d'échappement d'un moteur à allumage commandé destiné notamment à la propulsion d'un véhicule automobile, comprenant une conduite d'échappement, un élément catalytique d'oxydation à trois voies régulé par une sonde lambda et un élément catalytique travaillant par réduction catalytique sélective, dit catalyseur SCR, pour abaisser encore le NOₓ, le catalyseur SCR (10) étant disposé dans une conduite de dérivation (7) parallèle au conduit d'échappement (6), entre la sonde lambda (4) et l'élément catalytique d'oxydation (14), et au moins le conduit de dérivation (7) ou le conduit d'échappement (6) pouvant être régulé en fonction de paramètres moteurs au moyen d'un volet d'échappement (8, 9), caractérisé par le fait que les volets d'échappement (8, 9) dans le conduit de dérivation (7) et/ou dans le conduit d'échappement (6) sont commandés en fonction de la température du catalyseur SCR (10) et de l'élément catalytique d'oxydation (14), ainsi que de la proportion d'oxygène dans les gaz d'échappement au niveau de la sonde lambda (4).

2. Ligne d'échappement selon la revendication 1, caractérisé par le fait qu'une sonde d'oxyde d'azote disposée dans le flux de gaz d'échappement en amont du catalyseur SCR (10) agit sur la commande des volets d'échappement (8, 9).

3. Ligne d'échappement selon la revendication 1 ou 2, caractérisé par le fait qu'un ou plusieurs éléments catalytiques de démarrage (11; 11') sont disposés dans un tronçon entre la sonde lambda (4) et l'élément catalytique d'oxydation (14) et sont contournés par le conduit de dérivation (7).

## Claims

1. Exhaust train of an Otto engine, in particular for driving a motor vehicle, with an exhaust pipe, a three-way oxidation catalyst regulated by a lambda probe and a catalyst working with selective catalytic reduction, a so-called SCR catalyst, for further reduction of Noₓ, wherein the SCR catalyst (10) is arranged in a bypass pipe (7) running parallel to the exhaust pipe (6) between the lambda probe (4) and the oxidation catalyst (14) and at least the bypass pipe (7) or the exhaust pipe (6) are regulatable with an exhaust valve (8, 9) controlled as a function of engine parameters, characterised in that the exhaust valves (8, 9) in the bypass pipe (7) and/or in the exhaust pipe (6) are controlled as a function of the temperature of the SCR catalyst (10) and of the oxidation catalyst (14) as well as the proportion of oxygen in the exhaust gas at the lambda probe (4).

2. Exhaust train according to claim 1, characterised in that a nitrogen oxide probe arranged in the exhaust stream in front of the SCR catalyst (10) acts on the control system for the exhaust valves (8, 9).

3. Exhaust train according to claim 1 or 2, characterised in that in a region between lambda probe (4) and oxidation catalyst (14), one or more primary catalytic converters (11; 11') are arranged and are bypassed by the bypass pipe (7).
